# EUROPEAN PATENT APPLICATION

(11) **EP 0 880 927 A1**
(43) Date of publication of application: **02.12.1998**
(21) Application number: 97830241.2
(22) Date of filing: 26.05.1997
(51) Int. Cl.: A47J 31/30

(54) **Pressure coffee machine for domestic use**

(71) Applicant: Borelli, Alfo, 46100 Mantova (IT)
(72) Inventor: Borelli, Alfo, 46100 Mantova (IT)

(57) **Abstract**

Pressure coffee machine equipped with boiler (1) and ground coffee container (5) separated, connected by two pipes (2,3) and all closed by only one cover (8), where the vapor, produced in the boiler during the heating, presses the hot water to rise into the main pipe (2), pass through the cover (8) in a provided passage, goes through the ground coffee and falls in the espresso coffee container (10) mounted over the boiler. When the cover (8) is open, it is possible to replace the ground coffee and to insert the water in the boiler by the main pipe (2), while the inner air comes out of the boiler from a secondary pipe (3).

## Description

The invention concerns a pressure coffee machine conformed to prepare espresso coffee drinked usually in Italy. This pressure coffee machine is indicated for domestic use with heating generated by kitchen stoves.

Almost all the types of existing espresso coffee machine used for this purpose, foresee the ground coffee container into the boiler, where the holding gasket is subject to torsion all the times that the ground coffee is restored; additionally, this gasket, resulting near to the font of heat, becomes easily hardened, thus making necessary to force the fastening or to accept irrational exits of vapor. An other drawback that occurs in common espresso coffee machine consists of the fact that a part of the espresso coffee returns in the bottom of the boiler, where if it remains there some hours, it induces an bitter taste in the espresso coffee produced afterward. Besides the air present in the boiler of the coffee-machine during the heating increases its volume and produces the passage of the water through the ground coffee when it is not hot enought.

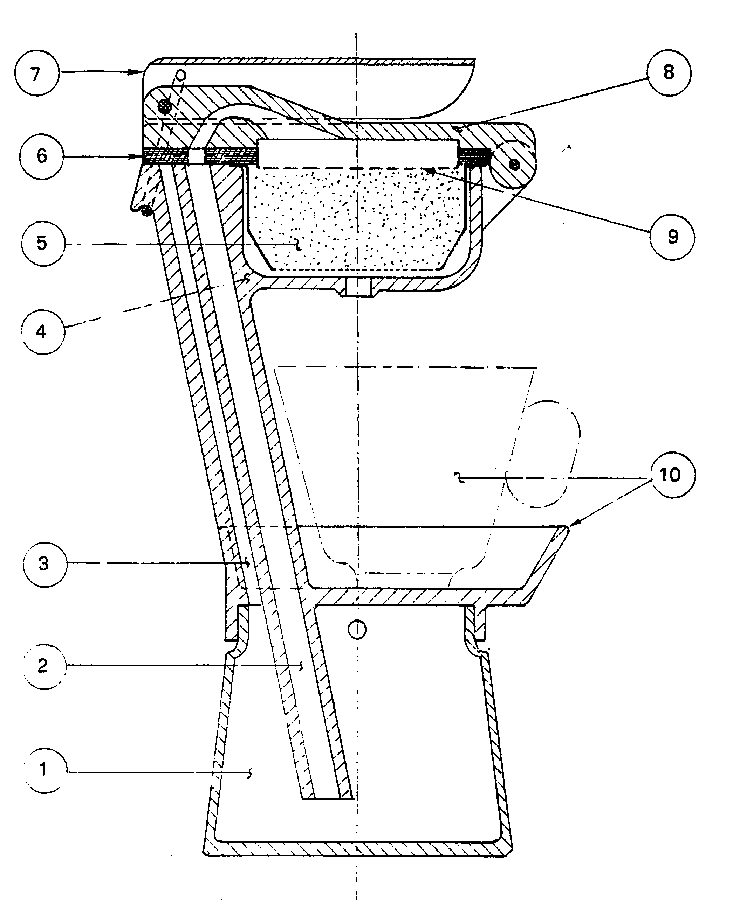

Principal purpose of the present coffee-machine is to allow an easier closing without forcings, to have the gasket distant from the font of heat, to eliminate the return of the espresso coffee in the boiler and to allow a complete filling of the boiler avoiding thus the presence of air bubble.
[cn1][cn2]
The drawing shows an example of espresso coffee machine cutted on diametral vertical axis, closed in the heating condition. It is composed by two principal bodies; a lower part made by the boiler 1 and the container of the espresso coffee 10 and an upper part made by the support 4 where lodges the ground coffee container 5 overlapped by the cover 8 that include the gasket 6 and the bored plate distributor (9). The two bodies of the coffe-machine are connected by two pipes 2 and 3 , the first lets the water pass in the two directions, the other vent the boiler inner air during the introduction of the water. The differences among the two pipes are the followings: from the boiler side, the pipe 2 lowers until almost the bottom, while the pipe 3 stop in the higher part of the boiler; from the cover side, instead, the pipe 3 is closed by the gasket 6, while the pipe 2 passes, through a hole present in the gasket, to the cover in the central inferior part of it.

Once the above mentioned rules are respected, the mutual position of the two pipes is not bounding for the correct behaviour of the coffe machine.

Here after is a complete operating cycle of the coffe machine.
Once the lever fastener 7 is lift; the cover, together with the gasket 6 and the distributor 9, is turned upside-down, by pivotting on the hinge; in this condition the ground coffee container 5 can be removed for the refill; the pipes 2 and 3 result accessible for the introduction of the water, which is operated using the pipe 2. During this action, from the pipe 3 will come out the inner air present in the boiler, until it is present, and water after, when the boiler is filled. After the introduction and filling of the ground coffee container, the coffe machine can be closed by repositioning the cover on top of the coffe machine, as it is represented in the attached drawing. The cover is pressed by operating on the device 7 to assure its completes holding by the elastic gasket 6, that overlaps the ground coffee container, the border of the pipe 2 and the whole opening of the vent pipe 3. During the heating operation of the coffee machine, vapor is generated, that storage in the upper part of the boiler 1, where it cannot go out by pipe 3 due to the effect of the gasket 6 which hermetically seal it. The expansion due to the heating of the boiler pushes the water to rise through the pipe 2, to go through the passage provided in the cover 8 and to spread allover the coffee through the distributor 9. The ground coffee container 5, which is finely bored only in the inferior part, obliges the hot water to go through the coffee and transform it in an infusion that fall freely in the container 10.
As described before, it is evident that the complete cycle of operation of this coffee machine requires the manipulation of the upper cover only; for this reason the boiler can be locked permanently to the upper body during manufacturing.

## Claims

1. Pressure coffee machine characterized by the fact that: the ground coffee container is placed out from the boiler, over the infusion coffee container; the water circulates through two connecting pipes (2 and 3) and passage provided in the cover; the cover seals simultaneously both the boiler and the ground coffee container.

2. Pressure coffee machine as claimed in claim 1 where the vent pipe (3) allows the total filling of the boiler and of the pipes (2) and (3), avoiding even the presence of small bubbles of air.

3. Pressure coffee machine as claimed in claims 1 and 2 where the cover is the only component of interception for its own operation.

4. Pressure coffee machine as claimed in claims 1, 2 and 3 characterized by the fact that the gasket, beside being located far from the heating source, is only pressed and not subject to torsional stress, during the fastening ; in this way is possible to reduce the effort of the action and to reduce the usury of the gasket.
